# EUROPÄISCHE PATENTSCHRIFT

(11) **EP 1 350 973 B1**
(45) Veröffentlichungstag und Bekanntmachung des Hinweises auf die Patenterteilung: **19.01.2005**
(21) Anmeldenummer: 03005745.9
(22) Anmeldetag: 14.03.2003
(51) Int. Cl.: F16D 3/32

(54) **Doppelgelenkwelle**
Double cardan universal joint
Double joint universel du type cardan

(30) Priorität: 19.03.2002 DE 10212243
(43) Veröffentlichungstag der Anmeldung: 08.10.2003
(73) Patentinhaber: Elbe & Sohn GmbH & Co. KG, 74302 Bietigheim-Bissingen (DE)
(72) Erfinder: Mondry, Siegfried, 74321 Bietigheim-Bissingen (DE)
(74) Vertreter: Sartorius, Peter, Dipl.-Ing.

(56) Entgegenhaltungen:
- DE-A- 19 818 570
- US-A- 1 774 679
- US-A- 2 855 232
- US-A- 2 953 910
- US-A- 3 120 746

## Beschreibung

Die Erfindung bezieht sich auf eine Doppelgelenkwelle für Fahrzeuge.

Es sind allgemein Doppelgelenkwellen bekannt, die ein erstes und ein zweites Zapfenkreuz aufweisen, die über ein erstes und zweites Gabelgelenk wirkungsmäßig miteinander verbunden sind, wobei die beiden Gabelgelenke über ein Zentrierelement und eine Kugelkalotte verbunden sind. Derartige Verbindungsarten waren in der Vergangenheit sehr problematisch. Bei den bekannten Doppelgelenkwellen sind insbesondere im Bereich der Zentriereinrichtung sehr starke Verschleißerscheinungen aufgetreten, die dann auch zum Wellenbruch geführt haben.

US-A-1 774 679 offenbart eine Doppelgelenkwelle gemäβ dem Oberbegriff des Anspruchs 1. Der Erfindung liegt die Aufgabe zugrunde, die tribologischen Eigenschaften der Gelenkwelle zu verbessern.

Diese Aufgabe wird durch eine Doppelgelenkwelle gemäβ Anspruch 1 gelöst. Gelöst wird die Aufgabe erfindungsgemäß durch folgende Merkmale:
a) die Doppelgelenkwelle weist ein erstes und ein zweites Zapfenkreuz auf,
b) die Zapfenkreuze sind in einem ersten und einem zweiten Gabelgelenk aufgenommen,
c) die beiden Gabelgelenke stehen über ein Zentrierelement in Antriebsverbindung,
d) das Zentrierelement weist am ersten Gabelgelenk eine Kugelkalotte auf, die zur Aufnahme einer Zentrierkugel dient,
e) die Zentrierkugel ist in der am Gabelgelenk vorgesehenen Kalotte aufgenommen,
f) die in der Kalotte aufgenommene Zentrierkugel ist mit einer Bohrung zur Aufnahme eines Zentrierzaptens versehen,
g) der mit dem zweiten Gabelgelenk fest verbunden ist,
h) die Bohrung der Zentrierkugel und/oder der Zentrierzapfen und/oder eine auf dem Zentrierzapfen vorgesehene Gleitlagerbuchse weist eine oder mehrere Fettkammern für Gleitmittel auf.

Hierdurch wird erreicht, dass bei Doppelgelenkwellen die Dauerfestigkeit auch für hohe Drehzahlen wesentlich verbessert und die Schmiereigenschaften zwischen den beweglichen Teilen derart gestaltet werden, dass auch bei sehr langen Laufzeiten nur ganz geringfügiger Abrieb auftritt.

Vorteilhaft ist es hierzu auch, dass die Gleitlagerbuchse zahlreiche mit Abstand zueinander angeordnete Fettkammern aufweist.

Durch die Verwendung einer Gleitlagerbuchse mit zahlreichen mit Abstand zueinander angeordneten Fettkammern kann das Schmiermittel auf einfache Weise gut zwischen die beiden zu bewegenden Teile eingebracht und somit die Gleitfähigkeit über lange Standzeiten sichergestellt werden.

Eine zusätzliche Möglichkeit ist gemäß einer Weiterbildung, dass die Kalotte an ihrer Innenoberfläche und/oder die Zentrierkugel auf ihrer Zentrierkugelaußenoberfläche eine oder mehrere Vertiefungen aufweist. Die an verschiedenen Stellen vorgesehenen Vertiefungen stellen eine weitere Verbesserung der erfindungsgemäßen Vorrichtung dar und gewährleisten ebenfalls, dass bei allen gegeneinander verstellbaren Teilen oder drehbaren Teilen eine gute Befettung sichergestellt wird.

Ferner ist es vorteilhaft, dass die Gleitlagerbuchse aus einem weicheren Material als die Zentrierkugel gebildet ist. Hierdurch wird ebenfalls eine Verbesserung der Standzeit der Doppelgelenkwelle erreicht.

Vorteilhaft ist es auch, dass die Gleitlagerbuchse aus Kunststoff, Stahl oder Bronze gebildet ist.

Gemäß einer bevorzugten Ausführungsform der erfindungsgemäßen Lösung ist schließlich vorgesehen, dass der Zentrierzapfen induktiv gehärtet und nach dem Härtungsvorgang angelassen ist.

Von besonderer Bedeutung ist für die vorliegende Erfindung, dass die Oberfläche der Zentrierkugel oberflächenbeschichtet und in die Oberfläche Teflonmaterial eingearbeitet ist.

Im Zusammenhang mit der erfindungsgemäßen Ausbildung und Anordnung ist es von Vorteil, dass auf der Oberfläche bzw. Außenoberfläche des Zentrierzapfens eine Metallschicht unter Plasma bei Drücken unterhalb von 5 x 10⁻¹ mbar aufgebracht ist.

Vorteilhaft ist es ferner, dass die erste Schicht bzw. Vorschicht im PVCD-Verfahren, die zweite Schicht im Aufdampfverfahren und die dritte Schicht im PVCD-Verfahren aufgebracht wird, wobei die erste zwischen der Oberfläche des Zentrierzapfens und der zweiten Schicht bzw. Metallschicht vorgesehene Vorschicht eine Schichtdicke aufweist, die kleiner als 200 Å stark ist.

Gemäß einer weiteren Ausführungsform ist es von Vorteil, dass die Zentrierkugel drehfest mit der Buchse und/oder dem Zentrierzapfen verbunden ist.

Ferner ist es vorteilhaft, dass der Querschnitt des Zentrierzapfens und der Innendurchmesser der Bohrung der Buchse und/oder der Bohrung der Zentrierkugel unrund ist.

In weiterer Ausgestaltung der Erfindung ist es vorteilhaft, dass die Spielpaarung zwischen der Kalotte und der Kugel gleich oder kleiner ist als die Spielpaarung zwischen der Bohrung der Kugel und dem Außendurchmesser des Zentrierzapfens und dass der Hohlraum oder Innenraum der Kalotte durch einen Balg abgedichtet ist.

Schließlich ist es von Vorteil, dass die Metallschicht auf dem Zapfen eine Ni-Schicht ist mit größerer Härte als die Metallschicht oder Ni-Schicht auf der Kugeloberfläche, wobei in letzterer Teflon mit eingearbeitet ist.

Weitere Vorteile und Einzelheiten der Erfindung sind in den Patentansprüchen und in der Beschreibung erläutert und in den Figuren dargestellt. Es zeigt:
- Figur 1: eine Schnittdarstellung der Doppelgelenkwelle mit einem in einer Zentrierkugel aufgenommenen Zentrierzapfen und einer Buchse,
- Figur 2: eine perspektivische Darstellung der Zentrierkugel,
- Figur 3: ein weiteres Ausführungsbeispiel einer Doppelgelenkwelle mit einer Zentrierkugel, die drehfest mit dem Drehzapfen verbunden ist.

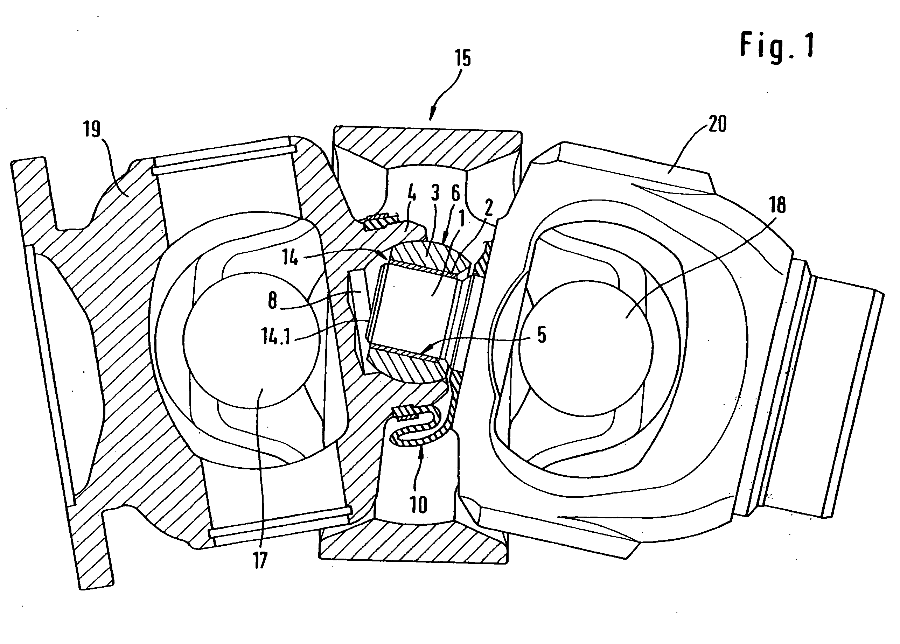

In der Zeichnung ist in Figur 1 eine schematische Darstellung einer Doppelgelenkwelle für Fahrzeuge dargestellt, die ein erstes und zweites Zapfenkreuz 17 und 18 aufweist. Das in Figur 1 dargestellte linke Zapfenkreuz 17 weist eine Kalotte 4 bzw. Kugelkalotte auf, die fester Bestandteil des Zapfenkreuzes 19 ist und die zur Aufnahme einer Zentrierkugel 3 dient, die wiederum mit einer Bohrung 14 zur Aufnahme eines Zentrierzapfens 1 ausgestattet ist. Der Zentrierzapfen 1 weist eine Zentrierstirnfläche 14.1 auf, die mit einem Innenraum bzw. einem Hohlraum 8 eine geschlossene Kammer bildet, die über einen Faltenbalg 10 nach außen hin abgedichtet ist.

Der Zentrierzapfen 1 ist wiederum fest an dem zweiten Zapfenkreuz 18 angeordnet. Auf dem Zentrierzapfen 1 befindet sich eine beispielsweise aus Bronze gebildete Gleitlagerbuchse 2, die passgenau in die Zentrierkugel 3 eingesetzt werden kann. Die Buchse 2 weist eine Bohrung bzw. zylindrische Innenlagerfläche 14.2 auf.

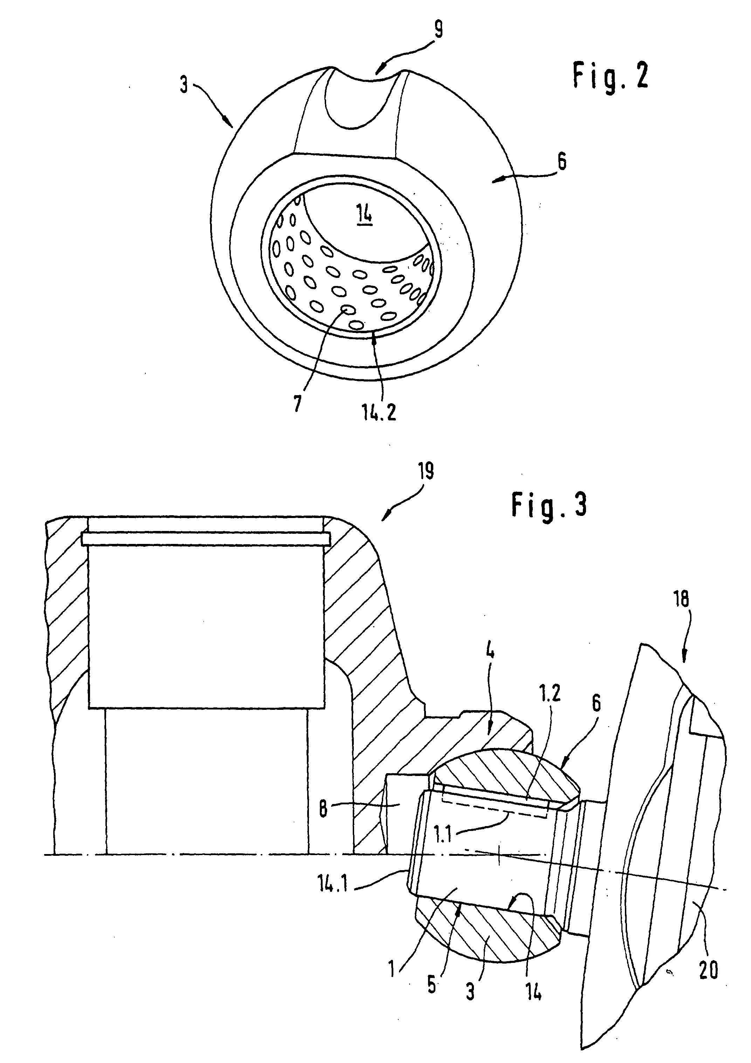

Die Gleitlagerbuchse 2 weist zahlreiche Fettkammern 7 auf, in denen Schmiermittel eingebracht werden kann. Gemäß Figur 2 sind die Fettkammern 7 kreisrund ausgebildet. Sie können jedoch auch elliptisch oder rechteckförmig ausgebildet sein, wobei der Abstand zwischen den einzelnen Fettkammern 7, die gleichmäßig auf dem Innenumfang der Gleitlagerbuchse 2 verteilt sind, auch unterschiedlich groß sein kann.

Anstelle der Gleitlagerbuchse 2 mit den zahlreichen Fettkammern 7 können diese auch nur in die Innenoberfläche der Bohrung 14.2 der Gleitlagerbuchse 2 eingebracht werden. Ebenso ist es möglich, diese Fettkammern 7 auf der Außenoberfläche des Zentrierzapfens 1 vorzusehen.

Die Oberfläche des Zentrierzapfens 1 kann aus einer Chrom-Nickel-Legierung bestehen und eine wesentlich größere Härte aufweisen als die Gleitlagerbuchse 2, die im Ausführungsbeispiel aus Bronze oder auch aus einem anderen eine geringere Härte aufweisenden Material gebildet sein kann. Beispielsweise ist es möglich, die Gleitlagerbuchse auch aus einem Kunststoffmaterial herzustellen.

Die Zentrierkugel 3 weist eine Zentrierkugelaußenoberfläche 6 auf, die ebenfalls oberflächenbeschichtet ist oder beschichtet sein kann, wobei der Schichtwerkstoff ebenfalls aus einer Chrom-Nickel-Legierung bestehen kann. Beispielsweise ist es möglich, dass die auf der Zentrierzapfenoberfläche 5 und/oder Zentrierkugeloberfläche 6 aufgebrachte Metallschicht unter Plasma bei Drücken unterhalb von 5 x 10⁻¹ mbar aufgebracht werden kann.

Die Zentrierkugeloberfläche 6, insbesondere Zentrierzapfenoberfläche 5, kann auch aus einem Schichtaufbau bestehen, um extrem hohe Härten mit sehr guter Leiteigenschaft zu erzielen. Hierzu ist es beispielsweise möglich, die erste Schicht bzw. die Vorschicht, die auf dem Zentrierzapfen 1 aufgebracht ist, im PVCD-Verfahren, die zweite Schicht im Aufdampfverfahren und die dritte Schicht wiederum im PVCD-Verfahren aufzubringen, wobei die erste zwischen der Oberfläche 5 des Zentrierzapfens 1 und der zweiten Schicht bzw. Metallschicht vorgesehene Vorschicht eine Schichtdicke aufweist, die kleiner als 200 Å ist.

Im Ausführungsbeispiel gemäß Figur 3 fehlt beispielsweise die Gleitlagerbuchse 2. Zur Vermeidung eines Abriebs zwischen der Bohrung 14 der Kugel 4 und der Zentrierkugelaußenoberfläche 6 kann beispielsweise anstelle eines kreisrunden Querschnitts für den Zentrierzapfen 1 bzw. die Bohrung 14 auch ein anderer Querschnitt gewählt werden, so dass keine Drehbewegung des Zentrierzapfens 1 in der Bohrung 14 der Zentrierkugel 3 möglich ist. D. h. man erhält auf diese Weise eine drehfeste Verbindung zwischen Zentrierzapfen 1 und Zentrierkugel 3. Im Ausführungsbeispiel gemäß Figur 3 weist hierzu der Zentrierzapfen 1 eine Nut 1.1 zur Aufnahme einer Feder 1.2 auf. Wie bereits erwähnt, kann auf die Gleitlagerbuchse 2 gemäß Figur 1 nach einem weiteren Ausführungsbeispiel verzichtet werden. Hierzu wird die Bohrung 14 der Zentrierkugel bzw. der Gelenkkugel 3 verkleinert und die Innenoberfläche der Gelenkkugel ebenfalls beschichtet. Anstelle der in der Gleitlagerbuchse 2 vorgesehenen Fettkammern 7 wird beispielsweise auf der Zentrierzapfenoberfläche 5 eine oder mehrere Schmierrillen vorgesehen, die bei einer axialen Bewegung des Zentrierzapfens für eine sehr gute Dauerschmierung zwischen der Bohrung 14 der Zentrierkugel 3 und der Zentrierzapfenaußenoberfläche 5 sorgen.

Gemäß Figur 2 kann zumindest die Zentrierkugelaußenoberfläche 6 mit mindestens einer Schmiernut 9 oder mit zahlreichen Vertiefungen bzw. Rillen ausgestattet sein, die ebenfalls zur Aufnahme eines Schmiermittels dienen und somit die Gleiteigenschaften der Kugel innerhalb der Kalotte 4 verbessern. Beispielsweise gelangt durch die Abschmierung von Schmiermittel im Faltenbalg 10 Schmiermittel in die Zentrier- bzw. Gelenkkugel 3 und auch in die Fettkammern 7 aufweisende Gleitlagerbuchse 2. Ebenso gelangt das Schmiermittel auch zwischen die verschiedenen Flächen zwischen der Zentrierkugelaußenoberfläche 6 und der Kalotte 4.

In einem weiteren nicht dargestellten Ausführungsbeispiel kann zum Beispiel die Bohrung 14 der Zentrierkugel (3) und/oder auch die Gleitlagerbuchse 2 mit spiralförmig ausgebildeten Schmiernuten versehen sein. Derartige Schmiernuten können auch an der Zentrierkugelaußenoberfläche 6 vorgesehen werden.

Die beiden Zapfenkreuze 17 und 18 bzw. die zugehörigen Gabelgelenke 19 und 20 sind über ein Zentrierelement 15 ebenfalls miteinander verbunden und somit statisch bestimmt.

### Bezugszeichenliste

- 1: Zentrierzapfen
- 1.1: Nut
- 1.2: Feder
- 2: Gleitlagerbuchse
- 3: Gelenkkugel bzw. Zentrierkugel
- 4: Kugelkalotte, Kalotte
- 5: Zentrierzapfenaußenoberfläche
- 6: Zentrierkugelaußenoberfläche
- 7: Fettkammer
- 8: Hohlraum, Innenraum
- 9: Schmiernut, Vertiefungen, Rillen
- 10: Faltenbalg
- 12: Schmierbohrung
- 13: Doppelgelenkwelle
- 14: Bohrung der Kugel 3
- 14.1: Stirnfläche von Zentrierzapfen 1
- 14.2: Bohrung der Buchse 2, Innenlagerfläche
- 15: Zentrierelement
- 17: erstes Zapfenkreuz
- 18: zweites Zapfenkreuz
- 19: erstes Gabelgelenk
- 20: zweites Gabelgelenk

## Patentansprüche

1. Doppelgelenkwelle für Fahrzeuge, wobei die Doppelgelenkwelle folgende Merkmale aufweist:
a) die Doppelgelenkwelle weist ein erstes und ein zweites Zapfenkreuz (17, 18) auf,
b) die Zapfenkreuze (17, 18) sind in einem ersten und einem zweiten Gabelgelenk (19, 20) aufgenommen,
c) die beiden Gabelgelenke (19, 20) stehen über ein Zentrierelement (15) in Antriebsverbindung,
d) das Zentrierelement (15) weist am ersten Gabelgelenk (19) eine Kugelkalotte (4) auf, die zur Aufnahme einer Zentrierkugel (3) dient,
e) die Zentrierkugel (3) ist in der am Gabelgelenk (19) vorgesehenen Kalotte (4) aufgenommen,
f) die in der Kalotte (4) aufgenommene Zentrierkugel (3) ist mit einer Bohrung (14) zur Aufnahme eines Zentrierzapfens (1) versehen,
g) der mit dem zweiten Gabelgelenk (20) fest verbunden ist,
**dadurch gekennzeichnet, dass**
h) die Bohrung (14) der Zentrierkugel (3) und/oder der Zentrierzapfen (1) und/oder eine auf dem Zentrierzapfen (1) vorgesehene Gleitlagerbuchse (2) eine oder mehrere Fettkammern (7) für Gleitmittel aufweist.

2. Vorrichtung nach Anspruch 1, **dadurch gekennzeichnet, dass** auf dem Zentrierzapfen eine Gleitlagerbuchse (2) vorgesehen ist, die zahlreiche mit Anstand zueinander angeordnete Fettkammern (7) aufweist.

3. Vorrichtung nach Anspruch 1 oder 2, **dadurch gekennzeichnet, dass** die Kalotte (4) an ihrer Innenoberfläche und/oder die Zentrierkugel (3) auf ihrer Zentrierkugelaußenoberfläche (6) eine oder mehrere vertiefungen (9) aufweist.

4. Vorrichtung nach einem der vorhergehenden Ansprüche, **dadurch gekennzeichnet, dass** die Gleitlagerbuchse (2) aus einem weicheren Material als die Zentrierkugel (3) gebildet ist.

5. Vorrichtung nach einem der vorhergehenden Ansprüche, **dadurch gekennzeichnet, dass** die Gleitlagerbuchse (2) aus Kunststoff, Stahl oder Bronze gebildet ist.

6. Vorrichtung nach einem der vorhergehenden Ansprüche, **dadurch gekennzeichnet, dass** der Zentrierzapfen (1) induktiv gehärtet und nach dem Härtungsvorgang angelassen ist.

7. Vorrichtung nach einem der vorhergehenden Ansprüche, **dadurch gekennzeichnet, dass** die Oberfläche (6) der Zentrierkugel (1) oberflächenbeschichtet und in die Oberfläche Teflonmaterial eingearbeitet ist.

8. Vorrichtung nach einem der vorhergehenden Ansprüche, **dadurch gekennzeichnet, dass** auf der Oberfläche bzw. Außenoberfläche (5) des Zentrierzapfens (1) eine Metallschicht unter Plasma bei Drücken unterhalb von 5 x 10⁻¹ mbar aufgebracht ist.

9. Vorrichtung nach einem der vorhergehenden Ansprüche, **dadurch gekennzeichnet, dass** die erste Schicht bzw. Vorschicht im PVCD-Verfahren, die zweite Schicht im Aufdampfverfahren und die dritte Schicht im PVCD-Verfahren aufgebracht wird, wobei die erste zwischen der Oberfläche (5) des Zentrierzapfens (1) und der zweiten Schicht bzw. Metallschicht vorgesehene Vorschicht eine Schichtdicke aufweist, die kleiner als 200 Å stark ist.

10. Vorrichtung nach einem der vorhergehenden Ansprüche, **dadurch gekennzeichnet, dass** die Zentrierkugel (3) drehfest mit der Buchse (2) und/oder dem Zentrierzapfen (1) verbunden ist.

11. Vorrichtung nach einem der vorhergehenden Ansprüche, **dadurch gekennzeichnet, dass** der Querschnitt des Zentrierzapfens (1) und der Innendurchmesser der Bohrung (14) der Buchse (2) und/oder der Bohrung der Zentrierkugel (3) unrund ist.

12. Vorrichtung nach einem der vorhergehenden Ansprüche, **dadurch gekennzeichnet, dass** die Spielpaarung zwischen der Kalotte (4) und der Kugel (3) gleich oder kleiner ist als die Spielpaarung zwischen der Bohrung (14) der Kugel (3) und dem Außendurchmesser des Zentrierzapfens (1).

13. Vorrichtung nach einem der vorhergehenden Ansprüche, **dadurch gekennzeichnet, dass** der Hohlraum oder Innenraum (8) der Kalotte (4) durch einen Balg (10) abgedichtet ist.

14. Vorrichtung nach einem der vorhergehenden Ansprüche, **dadurch gekennzeichnet, dass** die Metallschicht auf dem Zapfen (1) eine Ni-Schicht ist mit größerer Härte als die Metallschicht oder Ni-Schicht auf der Kugeloberfläche, wobei in letzterer Teflon mit eingearbeitet ist.

## Claims

1. A double articulated shaft for vehicles, wherein the double articulated shaft includes the following features:
a) the double articulated shaft includes a first and a second journal cross (17, 18),
b) the journal crosses (17, 18) are mounted in a first and a second (19, 20) fork joint,
c) the two fork joints (19, 20) are in driving connection via a centring element (15),
d) the centring element (15) is fitted with a domed seating (4) on the first fork joint (19), which is used to accommodate a centring sphere (3),
e) the centring sphere (3) is mounted in the domed seating (4) provided in the fork joint (19),
f) the centring sphere that is mounted in the domed seating (4) is provided with a drill hole (14) to accommodate a centring journal (1),
g) which is in fixed connection with the second fork joint (20),
**characterised in that**
h) the drill hole (14) of the centring sphere (3) and/or the centring journal (1) and/or a plain bearing bushing (2) provided on the centring journal (1) is equipped with one or more grease retainers (7) for lubricant.

2. The device according to claim 1,
**characterised in that**
a plain bearing bushing (2) is provided on the centring journal, and which is equipped with numerous grease retainers (7) arranged at a distance from each other.

3. The device according to claim 1 or 2,
**characterised in that**
one or more depressions (9) are provided on the inner surface of the seating (4) and/or on the outer surface (6) of the centring sphere (3).

4. The device according to any of the preceding claims,
**characterised in that**
the plain bearing bushing (2) is made from a softer material than the centring sphere (3).

5. The device according to any of the preceding claims,
**characterised in that**
the plain bearing bushing (2) is made from plastic, steel or bronze.

6. The device according to any of the preceding claims,
**characterised in that**
the centring journal (1) is inductively hardened and is tempered after the hardening process.

7. The device according to any of the preceding claims,
**characterised in that**
the surface (6) of the centring sphere (3) is surface-coated and Teflon material is incorporated into the surface thereof.

8. The device according to any of the preceding claims,
**characterised in that**
a metal layer is applied to the surface or outer surface (5) of the centring sphere (1) in a plasma environment and using pressures below 5 x 10⁻¹ mbar.

9. The device according to any of the preceding claims,
**characterised in that**
the first layer or pre-layer is applied in a PVCD process, the second layer is applied in a vacuum deposition process and the third layer is applied in a PVCD process, wherein the first pre-layer provided between the surface (5) of the centring journal (1) and the second layer or the metal layer has a layer thickness less than 200 Å.

10. The device according to any of the preceding claims,
**characterised in that**
the centring sphere (3) is connected in torque proof manner to the bushing (2) and/or the centring journal (1).

11. The device according to any of the preceding claims,
**characterised in that**
the cross section of the centring journal (1) and the inner diameter of the drill hole (14) in the bushing (2) and/or of the drill hole in the centring sphere (3) is non-circular.

12. The device according to any of the preceding claims,
**characterised in that**
the reciprocal play between the seating (4) and the sphere (3) is equal to or smaller than the reciprocal play between the drill hole (14) in the sphere (3) and the outer diameter of the centring journal (1).

13. The device according to any of the preceding claims,
**characterised in that**
the hollow space or internal space (8) of the seating (4) is sealed by a bellows (10).

14. The device according to any of the preceding claims,
**characterised in that**
the metal layer on the journal (1) is a Ni layer having greater hardness than the metal layer or Ni layer on the sphere surface, wherein Teflon is also incorporated into the latter.

## Revendications

1. Double arbre articulé pour véhicules automobiles, le double arbre articulé présentant les caractéristiques suivantes :
a) le double arbre articulé présente une première et une seconde croix à pivot (17, 18),
b) les croix à pivot (17, 18) sont réceptionnées dans une première et une seconde chapes (19, 20),
c) les deux chapes (19, 20) sont en liaison d'entraînement au moyen d'un élément de centrage (15),
d) l'élément de centrage (15) présente sur la première chape (19) une calotte sphérique (4), qui sert au logement d'une boule de centrage (3),
e) la boule de centrage (3) est réceptionnée dans la calotte (4) prévue sur la chape (19),
f) la boule de centrage (3) réceptionnée dans la calotte (4) est pourvue d'un alésage (14) pour la réception d'un pivot de centrage (21),
g) qui est relié de façon fixe à la seconde chape (20) ,
**caractérisé en ce que**
h) l'alésage (14) de la boule de centrage (3) et/ou le pivot de centrage (20) et/ou un coussinet lisse (2) prévu sur le pivot de centrage (1) présente une ou plusieurs chambres à graisse (7) pour du lubrifiant.

2. Dispositif selon la revendication 1, **caractérisé en ce que** sur le pivot de centrage est prévu un coussinet lisse (2) qui présente de nombreuses chambres à graisse (7) disposées à distance les unes des autres.

3. Dispositif selon la revendication 1 ou 2, **caractérisé en ce que** la calotte (4) et/ou la boule de centrage (3) présente une ou plusieurs cavités (9) sur respectivement sa surface intérieure et sa surface extérieure de boule de centrage (6).

4. Dispositif selon l'une quelconque des revendications précédentes, **caractérisé en ce que** le coussinet lisse (2) est formé à base d'un matériau plus souple que la boule de centrage (3).

5. Dispositif selon l'une quelconque des revendications précédentes, **caractérisé en ce que** le coussinet lisse (2) est à base de matière synthétique, d'acier ou de bronze.

6. Dispositif selon l'une quelconque des revendications précédentes, **caractérisé en ce que** le pivot de centrage (1) est durci par induction et est revenu après l'opération de durcissement.

7. Dispositif selon l'une quelconque des revendications précédentes, **caractérisé en ce que** la surface (6) de la boule de centrage (1) est enduite en surface et du téflon est incorporé dans la surface.

8. Dispositif selon l'une quelconque des revendications précédentes, **caractérisé en ce qu'**une couche métallique est appliquée sous plasma à des pressions inférieures à 5 x 10⁻¹ mbar sur la surface ou la surface extérieure (5) du pivot de centrage (1).

9. Dispositif selon l'une quelconque des revendications précédentes, **caractérisé en ce que** la première couche ou la couche préalable est appliquée dans le procédé PVCD, la seconde couche dans le procédé de métallisation par vaporisation et la troisième couche dans le procédé PVCD, la première couche préalable prévue entre la surface (5) du pivot de centrage (1) et la seconde couche ou la couche de métal présentent une épaisseur de couche qui est inférieure à 200 A.

10. Dispositif selon l'une quelconque des revendications précédentes, **caractérisé en ce que** la boule de centrage (3) est reliée de façon solidaire en rotation à la douille (2) et/ou au pivot de centrage (1).

11. Dispositif selon l'une quelconque des revendications précédentes, **caractérisé en ce que** la section du pivot de centrage (1) et le diamètre intérieur de l'alésage (14) de la douille (2) et/ou de l'alésage de la boule de centrage (3) est ovale.

12. Dispositif selon l'une quelconque des revendications précédentes, **caractérisé en ce que** l'ajustement avec jeu entre la calotte (4) et la boule (3) est identique ou inférieur à l'ajustement avec jeu entre l'alésage (14) de la boule (3) et le diamètre extérieur du pivot de centrage (1).

13. Dispositif selon l'une quelconque des revendications précédentes, **caractérisé en ce que** la cavité ou l'espace intérieur (8) de la calotte est rendu étanche par un soufflet (10).

14. Dispositif selon l'une quelconque des revendications précédentes, **caractérisé en ce que** la couche de métal sur le pivot (1) est une couche de nickel avec une dureté plus grande que la couche de métal ou la couche de nickel sur la surface de la boule, du téflon étant également incorporé dans cette surface.
